# EUROPEAN PATENT SPECIFICATION

(11) **EP 4 360 514 B1**
(45) Date of publication and mention of the grant of the patent: **23.07.2025**
(21) Application number: 21946261.1
(22) Date of filing: 23.11.2021
(51) Int. Cl.: A47J 27/08, A47J 27/09, A47J 36/38

(54) **PRESSURE COOKER HAVING NEGATIVE PRESSURE VACUUM STATE**
DRUCKKOCHGERÄT MIT UNTERDRUCKVAKUUMZUSTAND
AUTOCUISEUR AVEC ÉTAT DE VIDE À PRESSION NÉGATIVE

(30) Priority: 25.06.2021 CN 202110713151; 08.09.2021 CN 202111049908
(43) Date of publication of application: 01.05.2024
(73) Proprietor: Hangzhou MDJ Technology Co., Ltd, Hangzhou, Zhejiang 310000 (CN)
(72) Inventor: JI, Kunrong, Hangzhou, Zhejiang 310000 (CN); SHEN, Xiaoxing, Hangzhou, Zhejiang 310000 (CN); ZHONG, Yong, Hangzhou, Zhejiang 310000 (CN); LIU, Anmin, Hangzhou, Zhejiang 310000 (CN)
(74) Representative: Petraz, Gilberto Luigi
(86) International application number: PCT/CN2021/132227
(87) International publication number: WO 2022/267321

(56) References cited:
- WO-A1-2019/114890
- CN-A- 104 545 428
- CN-A- 104 545 428
- CN-A- 113 208 423
- CN-A- 113 662 423
- CN-B- 104 688 024
- CN-U- 203 153 405
- CN-U- 206 761 450
- CN-U- 208 243 426
- CN-U- 208 957 714
- DE-B3- 102017 011 432

## Description

### TECHNICAL FIELD

The present invention relates to the field of cooking pressure appliances, and in particular, to a pressure cooker configured to have a negative pressure vacuum state.

### BACKGROUND

Pressure cookers currently on the market have characteristics of sealing in a high pressure (safe) state and being in communication with the outside in a normal-pressure (ambient atmospheric pressure) state. There is a specific air gap between a sealing ring, a pressure relief valve, and a stop valve of the pressure cooker and a pressure cooker body. In the high pressure state, the sealing ring, the pressure relief valve, and the stop valve close the air gap through elastic deformation, to keep pressure in the pressure cooker; and in the normal-pressure state, air in the pressure cooker may freely exchange with air and microorganisms in an external environment through the air gap, and food in the pressure cooker gradually oxidizes and deteriorates.

CN 104 688 024 B discloses a pressure cooking utensil and control method thereof. DE 10 2017 011432 B3 discloses a pressure reducing device for a cooking pot. CN 104 545 428 discloses a cooking boiler provided with valve capable of maintaining constant pressure.

In a use process in daily life, the pressure cookers on the market cannot adapt to people's fast-paced lives. For example, people who go to work at night cook breakfast for the next day in advance or prepare lunch boxes that need to be brought to the company through the pressure cooker. After being prepared, the pressure cooker needs to be deflated to reduce the pressure, and then the food needs to be put in separate tableware and be put in the refrigerator. Otherwise, when the temperature is high, the food placed in the pressure cooker becomes stale, and may even breed bacteria and become spoiled. Therefore, there is an urgent need for a pressure cooker with strong applicability.

### SUMMARY

An objective of the present invention is to provide a pressure cooker configured to have a negative pressure vacuum state, aiming to resolve a problem that the pressure cooker cannot keep fresh.

To resolve the foregoing technical problems, the object of the present invention is achieved through the following technical solutions: A pressure cooker configured to have a negative pressure vacuum state is provided, including:
a body, having an accommodating space for placing food;
a cover, buckled to an opening of the body, and
a control structure for automatically opening and closing the accommodating space, where
the control structure includes:
   a sealing elastic member, arranged between the body and the cover, and configured to seal a gap between the body and the cover;
   a pressure relief valve, arranged on the cover, and configured to control air pressure in the accommodating space; and
   a stop valve, arranged on the cover, and configured to limit opening of the cover, where
   the accommodating space is configured to include a high pressure state, a micro-positive pressure state, and a negative pressure vacuum state, and when the accommodating space is in the high pressure state, the pressure relief valve is lifted upward by a high pressure thrust, to discharge high pressure gas in the accommodating space, and the stop valve is lifted upward under pressure to limit opening of the cover and is in a sealed state; and when the accommodating space is in the micro-positive pressure state or the negative pressure vacuum state, the pressure relief valve, the stop valve, the body, and the cover each are in the sealed state.

The sealing elastic member includes a first annular sealing gasket arranged on an inner side wall of the cover.

According to present invention, the body has an opening edge, the first annular sealing gasket is a sealing ring, including an upper ring, a lower ring, and a lower lip-shaped ring, an outer end of the upper ring is fixedly connected to an outer end of the lower ring, an inner end of the upper ring and an inner end of the lower ring are obliquely arranged in directions away from each other, an end of the lower lip-shaped ring is fixed on the lower ring, and the lower lip-shaped ring is obliquely arranged outward, when the accommodating space is in the high pressure state, the upper ring and the lower ring expand outward and deform under pressure, so that the upper ring strongly seals the cover, and the lower ring and the lower lip-shaped ring abut against the opening edge and strongly seal the body, and when the accommodating space is in the micro-positive pressure state or the negative pressure vacuum state, both the upper ring and the lower ring are reset to an initial free shape, and the lower lip-shaped ring compensates for a matching gap between the cover and the opening edge to keep the accommodating space in the negative pressure vacuum state.

Further, a lower lip-shaped ring that is symmetrically arranged with the lower lip-shaped ring is arranged on the upper ring.

Further, a deformation space is formed between the upper ring and the lower ring, and a reinforcing member configured to keep the upper ring and the lower ring from deforming in the negative pressure vacuum state is arranged in the deformation space.

Further, the reinforcing member includes a plurality of reinforcing ribs, and the plurality of reinforcing ribs are evenly arranged in the deformation space.

Further, the body has an opening edge, the first annular sealing gasket includes an upper connecting portion and a lower connecting portion, an outer end of the upper connecting portion is fixedly connected to an outer end of the lower connecting portion, and an inner end of the upper connecting portion and an inner end of the lower connecting portion are obliquely arranged in directions away from each other, when the accommodating space is in the high pressure state, the upper connecting portion and the lower connecting portion expand outward and deform under pressure, so that the upper connecting portion strongly seals the cover, and the lower connecting portion abuts against the opening edge and strongly seals the body, and when the accommodating space is in the micro-positive pressure state or the negative pressure vacuum state, both the upper connecting portion and the lower connecting portion are reset to an initial free shape.

Further, the sealing elastic member further includes a second annular sealing gasket arranged on the opening edge and configured to abut against a bottom side of the lower connecting portion.

Further, the second annular sealing gasket includes a sleeve portion sleeved on the opening edge and an abutting portion fixedly connected to the sleeve portion, and when the accommodating space is in one of the high pressure state, the micro-positive pressure state, and the negative pressure vacuum state, the abutting portion abuts against the bottom side of the lower connecting portion.

Further, an inner end of the abutting portion is fixedly connected to an inner end of the sleeve portion, and the abutting portion is obliquely arranged outward.

Further, the pressure relief valve includes a pressure relief valve body movably connected to the cover in a vertical direction and an elastic body arranged on the cover, an air outlet hole in communication with the accommodating space is provided on the elastic body, and when the accommodating space is in the high pressure state, the pressure relief valve body is lifted upward by the high pressure thrust, and the air outlet hole is opened; and when the accommodating space changes from the high pressure state to the micro-positive pressure state and enters the negative pressure vacuum state, the pressure relief valve body moves downward under an action of gravity, and seals the air outlet hole.

Further, an exhaust pipe is arranged on the cover, the exhaust pipe is arranged on an inner side of the elastic body, the pressure relief valve body includes a pressure applying portion sleeved on an outer wall of the exhaust pipe and an embedded portion, the embedded portion is arranged on an inner bottom wall of the pressure applying portion, and the embedded portion is configured to be reciprocally embedded into the air outlet hole.

Further, the embedded portion is arranged in a tapered shape with an outer diameter that gradually shrinks from top to bottom.

Further, the stop valve includes a stop valve body, a first sealing ring, and a second sealing ring, a through hole in which the stop valve body slides up and down is provided on the cover, the first sealing ring is arranged at one end of the stop valve body in the accommodating space, and the second sealing ring is arranged at the other end of the stop valve body, and when the accommodating space is in a pressure-rising state, the stop valve body moves upward, to limit opening of the cover, and drives the first sealing ring to seal the cover through hole; and when the accommodating space changes from the high pressure state to the micro-positive pressure state and enters the negative pressure vacuum state, the stop valve body moves downward back to an initial position under the action of gravity, and gravity of the stop valve causes the second sealing ring to seal the cover through hole.

Embodiments of the present invention provide a pressure cooker configured to have a negative pressure vacuum state, inter alia including a body having an accommodating space, a cover, and a control structure. The control structure includes a sealing elastic member, a pressure relief valve, and a stop valve. The accommodating space is configured to include a high pressure state, a micro-positive pressure state, and a negative pressure vacuum state, and when the accommodating space is in the high pressure state, the pressure relief valve is lifted upward by a high pressure thrust, to discharge high pressure gas in the accommodating space, and the stop valve is lifted upward under pressure to limit opening of the cover and is in a sealed state; and when the accommodating space is in the micro-positive pressure state or the negative pressure vacuum state, the pressure relief valve, the stop valve, the body, and the cover each are in the sealed state.

In embodiments of the present invention, cooked food is prevented from being oxidized by external air or corroded by microorganisms and deteriorated even if the cooked food is placed in the pressure cooker for a long time, thereby achieving the objective of providing vacuum preservation for the cooked food;
According to a second aspect, after heating on the pressure cooker stops, the accommodating space continues to keep a sealed state. A user does not need to immediately take out the food, but can wait until getting up in the morning or returning home at night, to directly heat the food in the pressure cooker before eating, which is simple and convenient, thereby perfectly fitting applicability of the pressure cooker to a requirement of today's fast-paced life; and
according to a third aspect, because the pressure cooker of this application has a vacuum preservation function, the food does not need to be kept fresh by an additional refrigerator, which reduces energy consumption.

### BRIEF DESCRIPTION OF THE DRAWINGS

To describe the technical solutions in embodiments of the present invention more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is an exploded view of a pressure cooker configured to have a negative pressure vacuum state according to Embodiment 1 of the present invention;
FIG. 2 is a cross-sectional view of a pressure cooker configured to have a negative pressure vacuum state according to Embodiment 1 of the present invention;
FIG. 3 is a cross-sectional view of a sealing elastic member according to Embodiment 1 of the present invention;
FIG. 4 is a cross-sectional view of a second annular sealing gasket according to Embodiment 1 of the present invention;
FIG. 5 is an enlarged view of a part A in FIG. 2, used to show a pressure relief valve according to Embodiment 1 of the present invention;
FIG. 6 is an exploded view of a pressure cooker configured to have a negative pressure vacuum state according to Embodiment 2 of the present invention;
FIG. 7 is a partial schematic diagram of a first annular sealing gasket according to Embodiment 2 of the present invention;

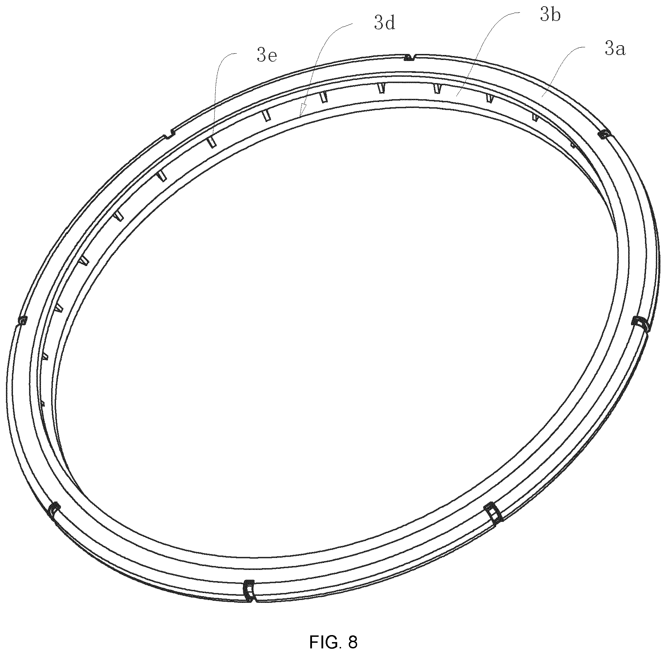

FIG. 8 is a schematic diagram of a structure of a first annular sealing gasket according to Embodiment 2 of the present invention;
FIG. 9 is a cross-sectional view of a pressure relief valve according to Embodiment 3 of the present invention;
FIG. 10 is a schematic diagram of a structure of an elastic body and an exhaust pipe according to Embodiment 4 of the present invention;
FIG. 11 is a schematic diagram of a structure of a second sealing ring according to Embodiment 5 of the present invention;
FIG. 12 is a schematic diagram of a structure of a first annular sealing gasket according to Embodiment 6 of the present invention; and
FIG. 13 is a schematic diagram of a structure of a first annular sealing gasket according to Embodiment 7 of the present invention.

Description of identifiers in the accompanying drawings:
1. Body; 11. accommodating space; 12. opening edge; 2. cover; 21. exhaust pipe; 3. sealing elastic member; 31. first annular sealing gasket; 32. upper connecting portion; 33. lower connecting portion; 34. second annular sealing gasket; 35. sleeve portion; 36. abutting portion; 4. pressure relief valve; 41. pressure relief valve body; 42. elastic body; 43. air outlet hole; 44. pressure applying portion; 45. embedded portion; 5. stop valve; 51. stop valve body; 52. first sealing ring; 53. second sealing ring; 54. cover through hole; 6. third sealing ring; 61. pressure relief hole; 62. receding surface; 7. limiting hole; 71. limiting post; 8. upper reinforcing portion; 81. lower reinforcing portion; 9. elastic annular groove; 3a. upper ring; 3b. lower ring; 3c. lower lip-shaped ring; 3d. deformation space; 3e. reinforcing member; and 3f. arc-shaped surface.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments.

It should be understood that when used in the specification and the appended claims, the term "comprise" and "include" indicate presence of the described features, entireties, steps, operations, elements, and/or components, but does not exclude presence or addition of one or more other features, entireties, steps, operations, elements, components, and/or sets thereof.

It should be further understood that the terms used in this specification of the present invention are merely for the purpose of illustrating specific embodiments, and are not intended to limit the present invention. As used in this specification and the appended claims, singular forms "a", "an", and "the" are intended to include plural forms, unless otherwise specified in the context clearly.

It should also be further understood that the term "and/or" used in the specification and the appended claims of the present invention refers to any combination and all possible combinations of one or more associated listed items, and includes these combinations.

Embodiments of the present invention provide a pressure cooker configured to have a negative pressure vacuum state.

### Embodiment 1:

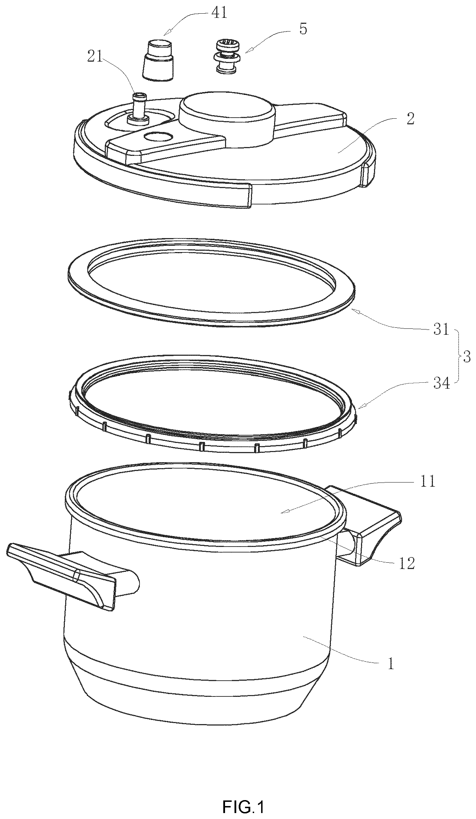

With reference to FIG. 1 to FIG. 5, the pressure cooker includes a cover 2, a control structure, and a body 1 having an accommodating space 11 and an opening edge 12. The control structure may automatically open and close the accommodating space 11 accordingly when gas pressure in the accommodating space 11 increases or decreases. To resolve the problem in the related art that after food is cooked in the pressure cooker, the temperature in the accommodating space 11 decreases until the accommodating space 11 is in a normal-pressure state, that is, gas in the accommodating space 11 circulates with the outside air through a gap between the opening edge 12 and the cover 2, causing the food in the cover 2 to gradually oxidize and deteriorate. Therefore, the control structure in embodiments of this invention includes a sealing elastic member 3, a pressure relief valve 4, and a stop valve 5. The sealing elastic member 3 is arranged between the body 1 and the cover 2, and is configured to seal the gap between the opening edge 12 and the cover 2. Both the pressure relief valve 4 and the stop valve 5 are arranged on the cover 2. The pressure relief valve 4 is configured to control air pressure in the accommodating space 11, and the stop valve 5 is configured to limit opening of the cover 2.

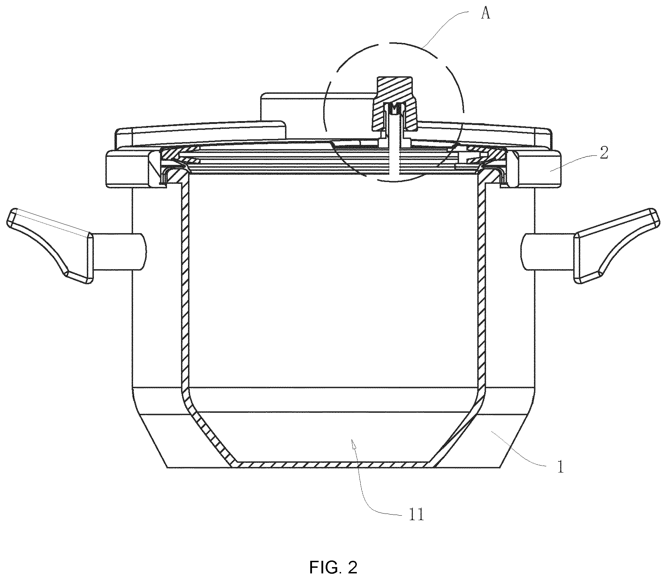

With reference to FIG. 1 and FIG. 2, the accommodating space 11 includes a high pressure state, a micro-positive pressure state, and a negative pressure vacuum state, and when the accommodating space 11 is in the high pressure state, the pressure relief valve 4 is lifted upward by a high pressure thrust, to discharge high pressure gas in the accommodating space 11, and the stop valve 5 is lifted upward under pressure to limit opening of the cover 2 and is in a sealed state; and when the accommodating space 11 is in the micro-positive pressure state or the negative pressure vacuum state, the pressure relief valve 4, the stop valve 5, the body 1, and the cover 2 each are in the sealed state.

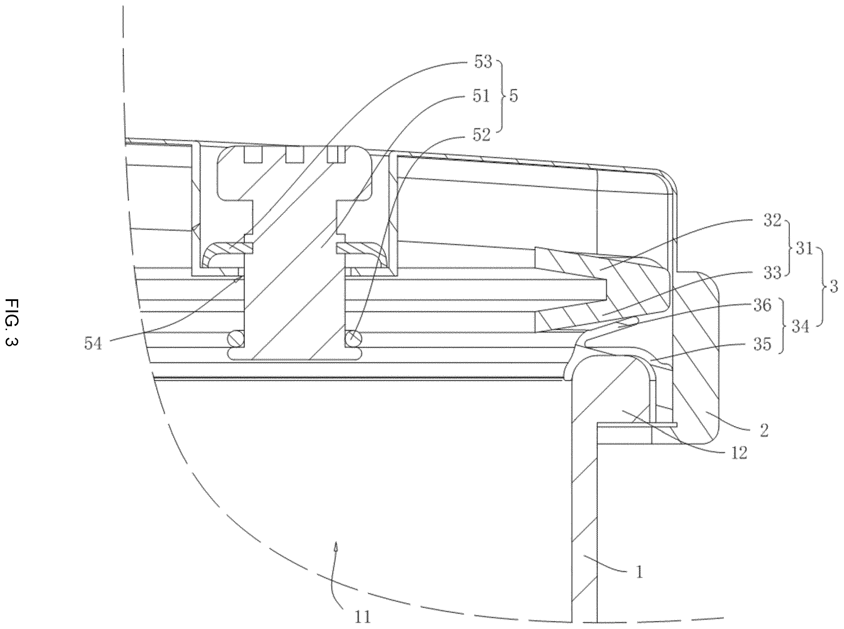

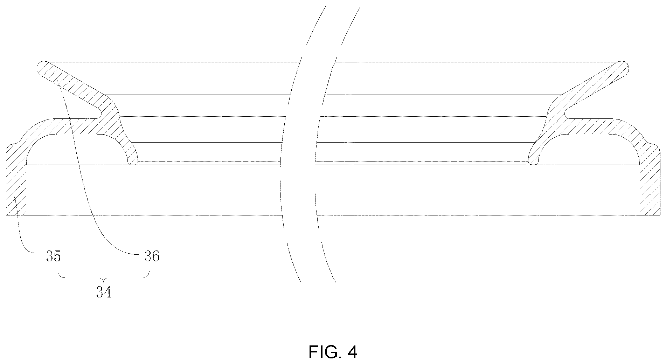

With reference to FIG. 3 and FIG. 4, in an embodiment, the sealing elastic member 3 includes a first annular sealing gasket 31 arranged on an inner side wall of the cover 2. Specifically, the first annular sealing gasket 31 abuts against the inner side wall of the cover 2 under an elastic force of the first annular sealing gasket 31. The first annular sealing gasket 31 includes an upper connecting portion 32 and a lower connecting portion 33, an outer end of the upper connecting portion 32 is fixedly connected to an outer end of the lower connecting portion 33, and an inner end of the upper connecting portion 32 and an inner end of the lower connecting portion 33 are obliquely arranged in directions away from each other, when the accommodating space 11 is in the high pressure state, the upper connecting portion 32 and the lower connecting portion 33 expand outward and deform under pressure, so that the upper connecting portion 32 strongly seals the cover 2, and the lower connecting portion 33 abuts against an upper side of the opening edge 12 and strongly seals the body 1, and when the accommodating space 11 is in the micro-positive pressure state or the negative pressure vacuum state, both the upper connecting portion 32 and the lower connecting portion 33 are reset to an initial free shape.

To avoid that after the body 1 is buckled to the cover 2, there is still a gap between the body 1 and the cover 2, causing the gas in the accommodating space 11 to circulate with the outside world, in embodiments of this application, the sealing elastic member 3 further includes a second annular sealing gasket 34 arranged on the opening edge 12 and configured to abut against a bottom side of the lower connecting portion 33. Specifically, the second annular sealing gasket 34 includes a sleeve portion 35 sleeved on the opening edge 12 and an abutting portion 36 fixedly connected to the sleeve portion 35. When the accommodating space 11 is in one of the high pressure state, the micro-positive pressure state, and the negative pressure vacuum state, the abutting portion 36 abuts against the bottom side of the lower connecting portion 33. In other words, the second annular sealing gasket 34 may always seal the gap between the cover 2 and the opening edge 12.

Further, an inner end of the abutting portion 36 is fixedly connected to an inner end of the sleeve portion 35, and the abutting portion 36 is obliquely arranged outward. Through this design, when the first annular sealing gasket 31 is pressed downward with the cover 2, the abutting portion 36 is under pressure and completely abuts against the lower connecting portion 33, which increases a contact area between the abutting portion 36 and the lower connecting portion 33 and improves air tightness between the cover 2 and the opening edge 12; and in an actual process, when the accommodating space 11 is in the micro-positive pressure state or the negative pressure vacuum state, both the upper connecting portion 32 and the lower connecting portion 33 are reset to an initial free shape, and at this moment, the abutting portion 36 still abuts against the lower connecting portion 33 under an action of restoring an elastic force of the abutting portion 36, thereby ensuring the air tightness between the cover 2 and the opening edge 12.

In an embodiment, both the first annular sealing gasket 31 and the second annular sealing gasket 34 are made of food-level silicone.

During manufacturing, the sleeve portion 35 may be fixedly arranged on the opening edge 12 according to actual needs. However, in embodiments of this application, the sleeve portion 35 is directly sleeved on the opening edge 12, so that the second annular sealing gasket 34 is detachable. In other words, when a user does not need the pressure cooker to have a freshness preservation function, the second annular sealing gasket 34 may be directly removed; and in addition, after the second annular sealing gasket 34 has been used for a long time, a sealing effect becomes worse. Therefore, the second annular sealing gasket 34 in embodiments of this application is convenient for the user to replace later.

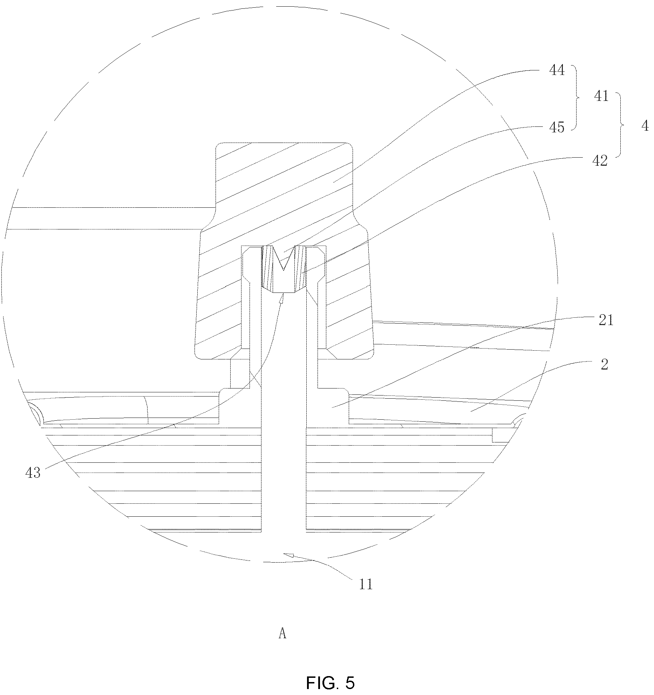

With reference to FIG. 2 and FIG. 5, in this embodiment, the pressure relief valve 4 includes a pressure relief valve body 41 movably connected to the cover 2 in a vertical direction and an elastic body 42 arranged on the cover 2, an air outlet hole 43 in communication with the accommodating space 11 is provided on the elastic body 42, the air outlet hole 43 penetrates in a length direction of the elastic body 42, and when the accommodating space 11 is in the high pressure state, the pressure relief valve body 41 is lifted upward by the high pressure thrust, and the air outlet hole 43 is opened; and when the accommodating space 11 changes from the high pressure state to the micro-positive pressure state and enters the negative pressure vacuum state, the pressure relief valve body 41 moves downward under an action of gravity, and seals the air outlet hole 43. In an embodiment, the elastic body 42 is made of food-level silicone.

Specifically, in an embodiment, an exhaust pipe 21 is arranged on the cover 2, and the elastic body 42 is arranged on an inner side of the exhaust pipe 21. Specifically, the exhaust pipe 21 is provided extending in a vertical direction, and the elastic body 42 is fixedly connected to an inner side wall of a top portion of the exhaust pipe 21 in a tight fitting or bonding manner. The pressure relief valve body 41 includes a pressure applying portion 44 sleeved on an outer wall of the exhaust pipe 21 and an embedded portion 45, the embedded portion 45 is arranged on an inner bottom wall of the pressure applying portion 44, and the embedded portion 45 is configured to be reciprocally embedded into the air outlet hole 43. Further, the embedded portion 45 is arranged in a tapered shape with an outer diameter that gradually shrinks from top to bottom. In other words, when the embedded portion 45 is embedded in the air outlet hole 43, the embedded portion 45 squeezes the elastic body 42, so that the elastic body 42 and the embedded portion 45 have better air tightness, to prevent the gas in the accommodating space 11 from leaking from the accommodating space 11; and in addition, the embedded portion 45 is arranged in a tapered shape, which may increase a contact area between high pressure gas and the embedded portion 45. Further, when the pressure of the accommodating space 11 exceeds a safe range, the high-temperature gas may lift the pressure relief valve body 41 in time, thereby discharging the high-temperature gas into the atmosphere.

In an embodiment, the stop valve 5 includes a stop valve body 51, a first sealing ring 52, and a second sealing ring 53, a cover through hole 54 in which the stop valve body 51 slides up and down is provided on the cover 2, the first sealing ring 52 is arranged at one end of the stop valve body 51 in the accommodating space 11, and the first sealing ring 52 is arranged at the other end of the stop valve body 51; specifically, there is a gap between the stop valve body 51 and the cover through hole 54; to facilitate mounting, the first sealing ring 52 is directly sleeved on a bottom portion of the stop valve body 51, and the second sealing ring 53 is embedded on a peripheral side wall of a middle portion of the stop valve body 51. When the accommodating space 11 is in a pressure-rising state, the stop valve body 51 moves upward, to limit opening of the cover 2, and drives the first sealing ring 52 to seal the cover through hole 54; and when the accommodating space 11 changes from the high pressure state to the micro-positive pressure state and enters the negative pressure vacuum state, the stop valve body 51 moves downward back to an initial position under the action of gravity, and gravity of the stop valve 5 causes the second sealing ring 53 to seal the cover through hole 54.

In a use scenario of the pressure cooker, the food in the pressure cooker is heat. In this case, the temperature of the gas in the accommodating space 11 rises and enters the high pressure state, and the food is cooked. After the food is prepared, heating on the pressure cooker stops, and the gas in the accommodating space 11 gradually decreases as time goes by. Because the sealing elastic member 3, the pressure relief valve 4, and the stop valve 5 in embodiments of this application are used together, the accommodating space 11 continues to keep in a sealed state, so that the accommodating space 11 may smoothly enter the micro-positive pressure state and the negative pressure vacuum state from the high pressure state. Specifically, both the upper connecting portion 32 and the lower connecting portion 33 are reset to an initial free shape, and the abutting portion 36 still abuts against a lower side of the lower connecting portion 33 under an action of restoring an elastic force of the abutting portion 36, and seals the gap between the cover 2 and the opening edge 12; the embedded portion 45 moves downward under an action of the pressure applying portion 44 and gravity of the embedded portion 45, and then completes being embedded into the air outlet hole 43, thereby sealing the elastic body 42; and the stop valve body 51 moves downward back to an initial position under the action of gravity, thereby driving the second sealing ring 53 to move downward and sealing the gap between the stop valve body 51 and the cover through hole 54.

in the foregoing manner, the prepared food may still keep a good degree of freshness even if the prepared food is placed in the pressure cooker for a long time, and does not become stale or even spoiled; according to a second aspect, after the pressure cooker stops heating, a user does not need to immediately take out the food, but can wait until getting up in the morning or returning home at night, to directly heat the food in the pressure cooker before eating, which is simple and convenient, thereby perfectly fitting applicability of the pressure cooker to a requirement of today's fast-paced life; and according to a third aspect, because the pressure cooker of this application has a vacuum preservation function, the food does not need to be kept fresh by an additional refrigerator, which reduces energy consumption.

### Embodiment 2:

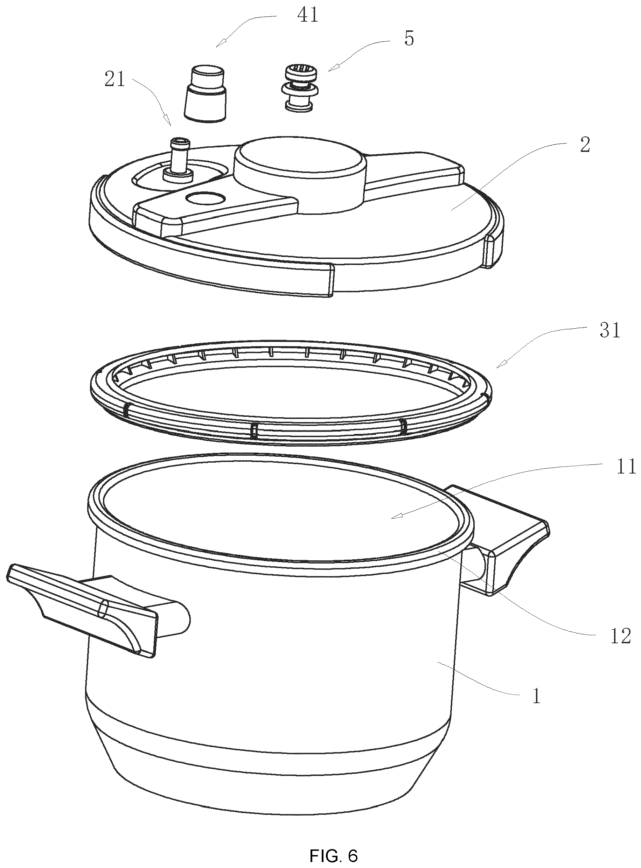

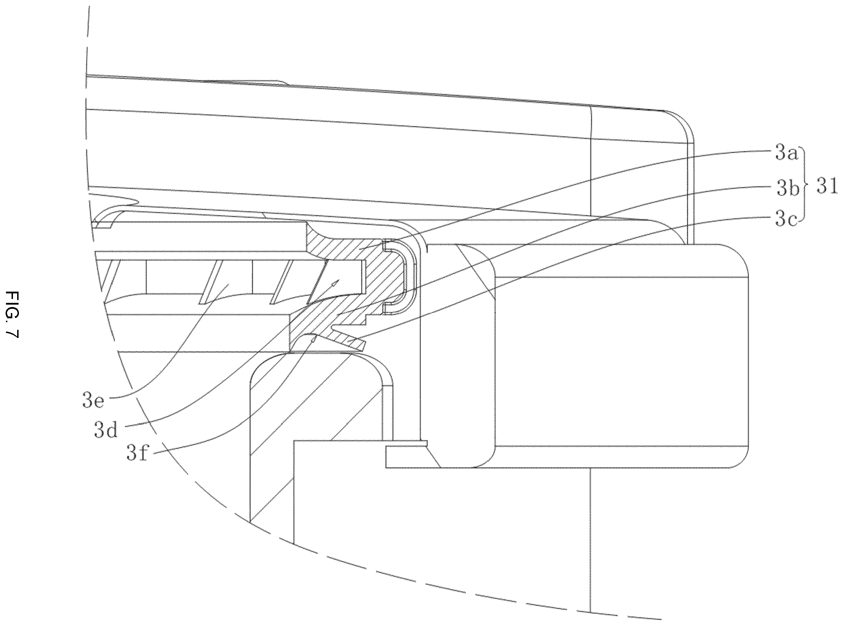

With reference to FIG. 6 and FIG. 7, a difference between this embodiment and Embodiment 1 is that the sealing elastic member 3 does not have a second annular sealing gasket 34, and the first annular sealing gasket 31 is a sealing ring, including an upper ring 3a, a lower ring 3b, and a lower lip-shaped ring 3c, an outer end of the upper ring 3a is fixedly connected to an outer end of the lower ring 3b, an inner end of the upper ring 3a and an inner end of the lower ring 3b are obliquely arranged in directions away from each other, an end of the lower lip-shaped ring 3c is fixed on the lower ring 3b, and the lower lip-shaped ring 3c is obliquely arranged outward, when the accommodating space 11 is in the high pressure state, the upper ring 3a and the lower ring 3b expand outward and deform under pressure, so that the upper ring 3a strongly seals the cover 2, and the lower ring 3b and the lower lip-shaped ring 3c abut against the opening edge 12 and strongly seal the body 1, and when the accommodating space 11 is in the micro-positive pressure state or the negative pressure vacuum state, both the upper ring 3a and the lower ring 3b are reset to an initial free shape, and the lower lip-shaped ring 34 compensates for a matching gap between the cover 2 and the opening edge 12 to keep the accommodating space 11 in the negative pressure vacuum state.

Specifically, the lower lip-shaped ring 3c is integrally formed on a side of the lower ring 3b away from the upper ring 3a, and a joint between the lower lip-shaped ring 3c and the lower ring 3b forms a smooth arc-shaped surface 3f. When the accommodating space 11 is in the high pressure state, the upper ring 3a and the lower ring 3b expand outward and deform under pressure, and the arc-shaped surface 3f is squeezed and abuts against the opening edge 12, thereby achieving a purpose of strongly sealing the body 1; and when the accommodating space 11 is in the micro-positive pressure state or the negative pressure vacuum state, both the upper ring 3a and the lower ring 3b are reset to an initial free shape, and a side of the lower lip-shaped ring 34 away from the upper ring 3a still abuts against the opening edge 12, to compensate for a matching gap between the cover 2 and the opening edge 12, thereby achieving a purpose of keeping the accommodating space 11 in the negative pressure vacuum state. During manufacturing, the upper ring 3a, the lower ring 3b, and the lower lip-shaped ring 3c are integrally formed according to actual needs.

During manufacturing, according to actual needs, an upper lip-shaped ring (not shown in the figure) that is symmetrically arranged with the lower lip-shaped ring 3c is arranged on the upper ring 3a. Through this design, the air tightness between the first annular sealing gasket 31 and the cover 2 is improved.

Preferably, a deformation space 3d is formed between the upper ring 3a and the lower ring 3b, and a reinforcing member 3e configured to keep the upper ring 3a and the lower ring 3b from deforming in the negative pressure vacuum state is arranged in the deformation space 3d. Specifically, the reinforcing member 3e includes a plurality of reinforcing ribs, and the plurality of reinforcing ribs are evenly arranged in the deformation space 3d. Through this design, a structural strength of the first annular sealing gasket 31 is improved, and deformation of the deformation space 3d in the negative pressure vacuum state is avoided.

In embodiments of this application, there are 32 reinforcing ribs. During manufacturing, according to actual needs, the reinforcing ribs may also be set to other quantities, provided that deformation of the deformation space 3d of the first annular sealing gasket 31 in the negative pressure vacuum state may be avoided. Therefore, details are not repeated.

### Embodiment 3:

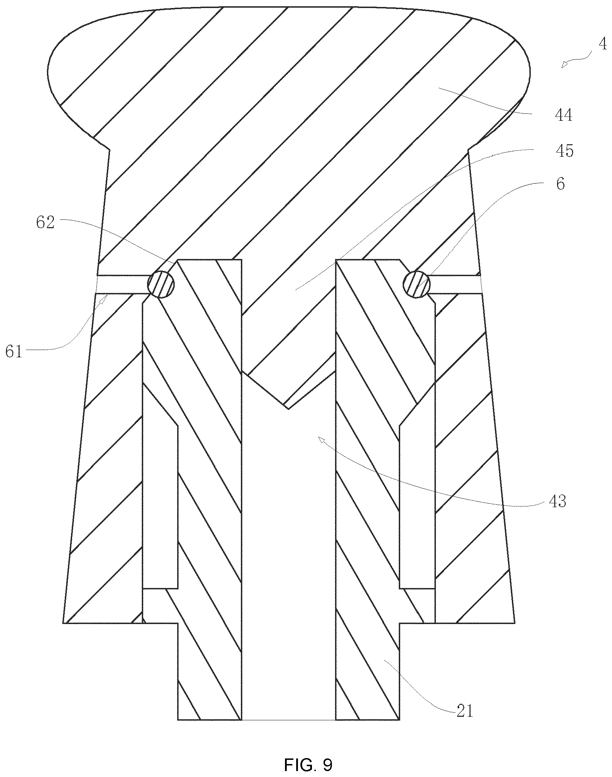

With reference to FIG. 9, a difference between this embodiment and Embodiment 1 is that the pressure relief valve 4 replaces the elastic body 42 with a third sealing ring 6, and the third sealing ring 6 is arranged on an outer side of a top portion of the exhaust pipe 21. Specifically, a plurality of pressure relief holes 61 running through an outer wall and an inner wall of the pressure applying portion 44 are provided on the pressure applying portion 44. A top portion of a peripheral side wall of the exhaust pipe 21 has a receding surface 62 that is obliquely arranged toward a geometric center line of the exhaust pipe 21, and the third sealing ring 6 is embedded in the receding surface 62.

In a use scenario, when the air pressure in the accommodating space 11 is higher than a safe air pressure state, the high-temperature gas pushes up the embedded portion 45, so that the high-temperature gas in the accommodating space 11 is discharged through the air outlet hole 43 and the pressure relief hole 61 in sequence, to ensure that the accommodating space 11 keeps a safe pressure in a food cooking process. When the temperature of the gas in the accommodating space 11 decreases, the embedded portion 45 moves downward under the action of the pressure applying portion 44 and gravity of the embedded portion 45, and a bottom wall on an inner side of the pressure applying portion 44 abuts against the third sealing ring 6, to ensure airtightness between the exhaust pipe 21 and the pressure relief valve 4.

### Embodiment 4:

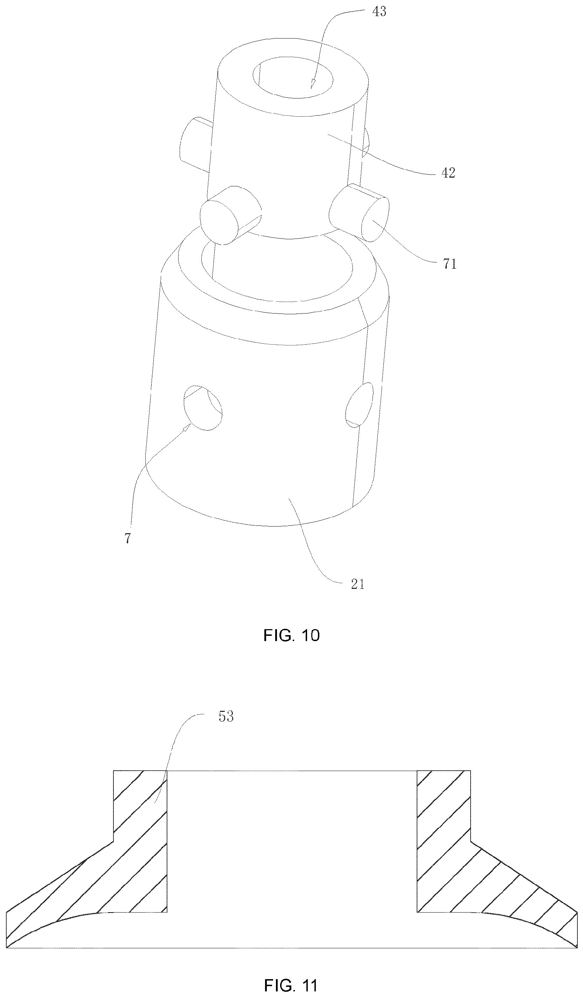

With reference to FIG. 10, a difference between this embodiment and Embodiment 1 is that the elastic body 42 is not fixedly connected to the exhaust pipe 21 in a tight fitting or bonding manner. A plurality of horizontally extending limiting holes 7 are provided on the exhaust pipe 21. A plurality of limiting posts 71 are integrally formed on a peripheral side wall of the elastic body 42. Each limiting post 71 may be embedded in the corresponding limiting hole 7, to implement a fixed connection between the elastic body 42 and the exhaust pipe 21 and ensure the air tightness between the elastic body 42 and the exhaust pipe 21.

### Embodiment 5:

With reference to FIG. 11, a difference between this embodiment and Embodiment 1 is that the second sealing ring 53 strengthens a fitting connection with the stop valve body 51.

### Embodiment 6:

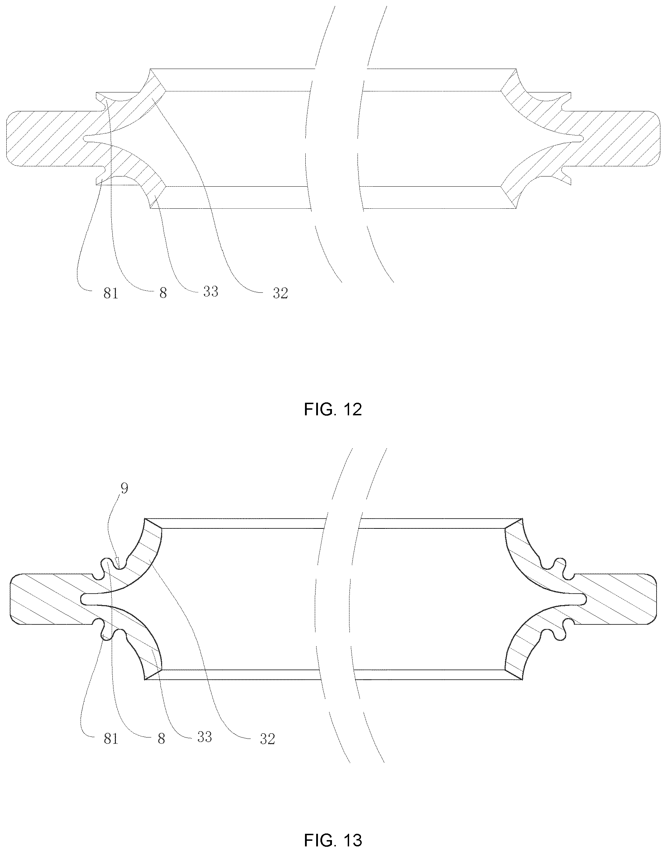

With reference to FIG. 12, a difference between this embodiment and Embodiment 1 is that the sealing elastic member 3 does not include the second annular sealing gasket 34, but an upper reinforcing portion 8 is arranged on an outer wall of the upper connecting portion 32, and a lower reinforcing portion 81 is arranged on an outer wall of the lower connecting portion 33; the upper reinforcing portion 8 and the lower reinforcing portion 81 are obliquely arranged outward, and the upper reinforcing portion 8 and the lower reinforcing portion 81 cause the accommodating space 11 to smoothly enter the micro-positive pressure state and the negative pressure vacuum state from the high pressure state in sequence, and may seal a gap between the cover 2 and the opening edge 12; and in addition, in the high pressure state, the upper connecting portion 32 and the lower connecting portion 33 may seal the gap between the cover 2 and the opening edge 12.

### Embodiment 7:

With reference to FIG. 13, a difference between this embodiment and Embodiment 6 is that two elastic annular grooves 9 are provided on both the upper connecting portion 32 and the lower connecting portion 33. The two elastic annular grooves 9 located on the upper connecting portion 32 are respectively located on two sides of the upper reinforcing portion 8. Similarly, the two elastic annular grooves 9 on an upper forehead of the lower connecting portion 33 also have the same structure. Through this design, deformation capabilities of the upper reinforcing portion 8 and the lower reinforcing portion 81 may be improved, thereby making it convenient and labor-saving for an operator.

The foregoing descriptions are merely specific implementations of the present invention, but are not intended to limit the protection scope of the present invention.

## Claims

1. A pressure cooker configured to have a negative pressure vacuum state, the pressure cooker comprising:
a body (1), having an accommodating space (11) for placing food;
a cover (2), buckled to an opening of the body (1), and
a control structure for automatically opening and closing the accommodating space (11), wherein
the control structure comprises:
a sealing elastic member (3), arranged between the body (1) and the cover (2), and configured to seal a gap between the body (1) and the cover (2);
a pressure relief valve (4), arranged on the cover (2), and configured to control air pressure in the accommodating space (11); and
a stop valve (5), arranged on the cover (2), and configured to limit opening of the cover (2), wherein
the accommodating space (11) is configured to comprise a high pressure state, a micro-positive pressure state, and a negative pressure vacuum state, and when the accommodating space (11) is in the high pressure state, the pressure relief valve (4) is lifted upward by a high pressure thrust, to discharge high pressure gas in the accommodating space (11), and the stop valve (5) is lifted upward under pressure to limit opening of the cover (2) and is in a sealed state; and when the accommodating space (11) is in the micro-positive pressure state or the negative pressure vacuum state, the pressure relief valve (4), the stop valve (5), the body (1), and the cover (2) each are in the sealed state,
wherein the sealing elastic member (3) comprises a first annular sealing gasket (31) arranged on an inner side wall of the cover (2),
**characterized in that,**
the body (1) has an opening edge (12), the first annular sealing gasket (31) is a sealing ring, comprising an upper ring (3a), a lower ring (3b), and a lower lip-shaped ring (3c), an outer end of the upper ring (3a) is fixedly connected to an outer end of the lower ring (3b), an inner end of the upper ring (3a) and an inner end of the lower ring (3b) are obliquely arranged in directions away from each other, an end of the lower lip-shaped ring (3c) is fixed on the lower ring (3b), and the lower lip-shaped ring (3c) is obliquely arranged outward, when the accommodating space (11) is in the high pressure state, the upper ring (3a) and the lower ring (3b) expand outward and deform under pressure, so that the upper ring (3a) strongly seals the cover (2), and the lower ring (3b) and the lower lip-shaped ring (3c) abut against the opening edge (12) and strongly seal the body (1), and when the accommodating space (11) is in the micro-positive pressure state or the negative pressure vacuum state, both the upper ring (3a) and the lower ring (3b) are reset to an initial free shape, and the lower lip-shaped ring (34) compensates for a matching gap between the cover (2) and the opening edge (12) to keep the accommodating space (11) in the negative pressure vacuum state.

2. The pressure cooker according to claim 1, wherein an upper lip-shaped ring that is symmetrically arranged with the lower lip-shaped ring (3c) is arranged on the upper ring (3a).

3. The pressure cooker according to claim 1, wherein a deformation space (3d) is formed between the upper ring (3a) and the lower ring (3b), and a reinforcing member (3e) configured to keep the upper ring (3a) and the lower ring (3b) from deforming in the negative pressure vacuum state is arranged in the deformation space (3d).

4. The pressure cooker according to claim 3, wherein the reinforcing member (3e) comprises a plurality of reinforcing ribs, and the plurality of reinforcing ribs are evenly arranged in the deformation space (3d).

5. The pressure cooker according to claim 1, wherein the body (1) has an opening edge (12), the first annular sealing gasket (31) comprises an upper connecting portion (32) and a lower connecting portion (33), an outer end of the upper connecting portion (32) is fixedly connected to an outer end of the lower connecting portion (33), and an inner end of the upper connecting portion (32) and an inner end of the lower connecting portion (33) are obliquely arranged in directions away from each other, when the accommodating space (11) is in the high pressure state, the upper connecting portion (32) and the lower connecting portion (33) expand outward and deform under pressure, so that the upper connecting portion (32) strongly seals the cover (2), and the lower connecting portion (33) abuts against the opening edge (12) and strongly seals the body (1), and when the accommodating space (11) is in the micro-positive pressure state or the negative pressure vacuum state, both the upper connecting portion (32) and the lower connecting portion (33) are reset to an initial free shape.

6. The pressure cooker according to claim 5, wherein the sealing elastic member (3) further comprises a second annular sealing gasket (34) arranged on the opening edge (12) and configured to abut against a bottom side of the lower connecting portion (33).

7. The pressure cooker according to claim 6, wherein the second annular sealing gasket (34) comprises a sleeve portion (35) sleeved on the opening edge (12) and an abutting portion (36) fixedly connected to the sleeve portion (35), and when the accommodating space (11) is in one of the high pressure state, the micro-positive pressure state, and the negative pressure vacuum state, the abutting portion (36) abuts against the bottom side of the lower connecting portion (33).

8. The pressure cooker according to claim 7, wherein an inner end of the abutting portion (36) is fixedly connected to an inner end of the sleeve portion (35), and the abutting portion (36) is obliquely arranged outward.

9. The pressure cooker according to claim 1, wherein the pressure relief valve (4) comprises a pressure relief valve body (41) movably connected to the cover (2) in a vertical direction and an elastic body (42) arranged on the cover (2), an air outlet hole (43) in communication with the accommodating space (11) is provided on the elastic body (42), and when the accommodating space (11) is in the high pressure state, the pressure relief valve body (41) is lifted upward by the high pressure thrust, and the air outlet hole (43) is opened; and when the accommodating space (11) changes from the high pressure state to the micro-positive pressure state and enters the negative pressure vacuum state, the pressure relief valve body (41) moves downward under an action of gravity, and seals the air outlet hole (43).

10. The pressure cooker according to claim 9, wherein an exhaust pipe (21) is arranged on the cover (2), the exhaust pipe (21) is arranged on an inner side of the elastic body (42), the pressure relief valve body (41) comprises a pressure applying portion (44) sleeved on an outer wall of the exhaust pipe (21) and an embedded portion (45), the embedded portion (45) is arranged on an inner bottom wall of the pressure applying portion (44), and the embedded portion (45) is configured to be reciprocally embedded into the air outlet hole (43).

11. The pressure cooker according to claim 10, wherein the embedded portion (45) is arranged in a tapered shape with an outer diameter that gradually shrinks from top to bottom.

12. The pressure cooker according to any one of claims 1 to 11, wherein the stop valve (5) comprises a stop valve body (51), a first sealing ring (52), and a second sealing ring (53), a cover through hole (54) in which the stop valve body (51) slides up and down is provided on the cover (2), the first sealing ring (52) is arranged at one end of the stop valve body (51) in the accommodating space (11), and the second sealing ring (53) is arranged at the other end of the stop valve body (51), and when the accommodating space (11) is in a pressure-rising state, the stop valve body (51) moves upward, to limit opening of the cover (2), and drives the first sealing ring (52) to seal the cover through hole (54); and when the accommodating space (11) changes from the high pressure state to the micro-positive pressure state and enters the negative pressure vacuum state, the stop valve body (51) moves downward back to an initial position under the action of gravity, and gravity of the stop valve (5) causes the second sealing ring (53) to seal the cover through hole (54).

## Patentansprüche

1. Druckkochtopf, der für einen Unterdruck-Vakuumzustand konfiguriert ist, wobei der Druckkochtopf Folgendes umfasst:
einen Körper (1) mit einem Aufnahmeraum (11) zum Einlegen von Lebensmitteln;
eine Abdeckung (2), die mit einer Öffnung des Körpers (1) verschnallt ist, und
eine Steuerstruktur zum automatischen Öffnen und Schließen des Aufnahmeraums (11), wobei
die Steuerstruktur Folgendes umfasst:
ein dicht-elastisches Element (3), das zwischen dem Körper (1) und der Abdeckung (2) angeordnet und dazu konfiguriert ist, einen Spalt zwischen dem Körper (1) und der Abdeckung (2) abzudichten;
ein Druckentlastungsventil (4), das an der Abdeckung (2) angeordnet und dazu konfiguriert ist, den Luftdruck in dem Aufnahmeraum (11) zu steuern; und
ein Absperrventil (5), das an der Abdeckung (2) angeordnet und dazu konfiguriert ist, das Öffnen der Abdeckung (2) zu begrenzen, wobei
der Aufnahmeraum (11) so konfiguriert ist, dass er einen Hochdruckzustand, einen Mikro-Überdruckzustand und einen Unterdruck-Vakuumzustand umfasst, und wenn sich der Aufnahmeraum (11) in dem Hochdruckzustand befindet, das Druckentlastungsventil (4) durch einen Hochdruckschub nach oben angehoben wird, um Hochdruckgas in dem Aufnahmeraum (11) abzulassen, und das Absperrventil (5) unter Druck nach oben angehoben wird, um das Öffnen der Abdeckung (2) zu begrenzen, und sich in einem abgedichteten Zustand befindet; und wenn sich der Aufnahmeraum (11) in dem Mikro-Überdruckzustand oder dem Unterdruck-Vakuumzustand befindet, das Druckentlastungsventil (4), das Absperrventil (5), der Körper (1) und die Abdeckung (2) jeweils in dem abgedichteten Zustand sind,
wobei das dicht-elastische Element (3) eine erste ringförmige Dichtung (31) umfasst, die an einer inneren Seitenwand der Abdeckung (2) angeordnet ist,
**dadurch gekennzeichnet, dass,**
der Körper (1) eine Öffnungskante (12) aufweist, die erste ringförmige Dichtung (31) ein Dichtungsring ist, der einen oberen Ring (3a), einen unteren Ring (3b) und einen unteren lippenförmigen Ring (3c) umfasst, ein äußeres Ende des oberen Rings (3a) mit einem äußeren Ende des unteren Rings (3b) fest verbunden ist, ein inneres Ende des oberen Rings (3a) und ein inneres Ende des unteren Rings (3b) schräg in voneinander abgewandten Richtungen angeordnet sind, ein Ende des unteren lippenförmigen Rings (3c) an dem unteren Ring (3b) befestigt ist, und der untere lippenförmige Ring (3c) schräg nach außen angeordnet ist, wenn sich der Aufnahmeraum (11) im Hochdruckzustand befindet, der obere Ring (3a) und der untere Ring (3b) sich unter Druck nach außen ausdehnen und verformen, so dass der obere Ring (3a) die Abdeckung (2) stark abdichtet und der untere Ring (3b) und der untere lippenförmige Ring (3c) gegen die Öffnungskante (12) drücken und den Körper (1) stark abdichten, und wenn sich der Aufnahmeraum (11) im Mikro-Überdruckzustand oder im Unterdruck-Vakuumzustand befindet, sowohl der obere Ring (3a) als auch der untere Ring (3b) in eine ursprüngliche, freie Form zurückgesetzt wird und der untere lippenförmige Ring (34) einen passenden Spalt zwischen der Abdeckung (2) und der Öffnungskante (12) ausgleicht, um den Aufnahmeraum (11) in dem Unterdruck-Vakuumzustand zu halten.

2. Druckkochtopf nach Anspruch 1, wobei auf dem oberen Ring (3a) ein oberer lippenförmiger Ring angeordnet ist, der symmetrisch zum unteren lippenförmigen Ring (3c) angeordnet ist.

3. Druckkochtopf nach Anspruch 1, wobei ein Verformungsraum (3d) zwischen dem oberen Ring (3a) und dem unteren Ring (3b) ausgebildet ist und ein Verstärkungselement (3e) im Verformungsraum (3d) angeordnet ist, welches dazu konfiguriert ist, die Verformung des oberen Rings (3a) und des unteren Rings (3b) im Unterdruck-Vakuumzustand zu verhindern.

4. Druckkochtopf nach Anspruch 3, wobei das Verstärkungselement (3e) eine Vielzahl von Verstärkungsrippen umfasst und die Vielzahl von Verstärkungsrippen gleichmäßig in dem Verformungsraum (3d) angeordnet ist.

5. Druckkochtopf nach Anspruch 1, wobei der Körper (1) eine Öffnungskante (12) aufweist, die erste ringförmige Dichtung (31) einen oberen Verbindungsabschnitt (32) und einen unteren Verbindungsabschnitt (33) umfasst, ein äußeres Ende des oberen Verbindungsabschnitts (32) mit einem äußeren Ende des unteren Verbindungsabschnitts (33) fest verbunden ist und ein inneres Ende des oberen Verbindungsabschnitts (32) und ein inneres Ende des unteren Verbindungsabschnitts (33) schräg in voneinander abgewandten Richtungen angeordnet sind, wobei, wenn sich der Aufnahmeraum (11) im Hochdruckzustand befindet, der obere Verbindungsabschnitt (32) und der untere Verbindungsabschnitt (33) sich unter Druck nach außen ausdehnen und verformen, so dass der obere Verbindungsabschnitt (32) die Abdeckung (2) stark abdichtet und der untere Verbindungsabschnitt (33) gegen die Öffnungskante (12) drückt und den Körper (1) stark abdichtet, und wenn sich der Aufnahmeraum (11) im Mikro-Überdruckzustand oder im Unterdruck-Vakuumzustand befindet, sowohl der obere Verbindungsabschnitt (32) als auch der untere Verbindungsabschnitt (33) in eine ursprüngliche, freie Form zurückgesetzt wird.

6. Druckkochtopf nach Anspruch 5, wobei das dicht-elastische Element (3) ferner eine zweite ringförmige Dichtung (34) umfasst, die an der Öffnungskante (12) angeordnet und dazu konfiguriert ist, gegen die Unterseite des unteren Verbindungsabschnitts (33) zu drücken.

7. Druckkochtopf nach Anspruch 6, wobei die zweite ringförmige Dichtung (34) einen Hülsenabschnitt (35), der an der Öffnungskante (12) ummantelt ist, und einen Anschlagabschnitt (36) umfasst, der mit dem Hülsenabschnitt (35) fest verbunden ist, und wobei der Anschlagabschnitt (36) gegen die Unterseite des unteren Verbindungsabschnitts (33) drückt, wenn sich der Aufnahmeraum (11) entweder im Hochdruckzustand, im Mikro-Überdruckzustand oder im Unterdruck-Vakuumzustand befindet.

8. Druckkochtopf nach Anspruch 7, wobei ein inneres Ende des Anschlagabschnitts (36) mit einem inneren Ende des Hülsenabschnitts (35) fest verbunden ist und der Anschlagabschnitt (36) schräg nach außen angeordnet ist.

9. Druckkochtopf nach Anspruch 1, wobei das Druckentlastungsventil (4) einen Druckentlastungsventilkörper (41), der in vertikaler Richtung beweglich mit der Abdeckung (2) verbunden ist, und einen elastischen Körper (42), der an der Abdeckung (2) angeordnet ist, umfasst, wobei ein Luftauslassloch (43), das mit dem Aufnahmeraum (11) in Verbindung steht, an dem elastischen Körper (42) vorgesehen ist, und wobei, wenn sich der Aufnahmeraum (11) in dem Hochdruckzustand befindet, der Druckentlastungsventilkörper (41) durch den Hochdruckschub nach oben angehoben wird und das Luftauslassloch (43) geöffnet wird; und wenn der Aufnahmeraum (11) von dem Hochdruckzustand in den Mikro-Überdruckzustand wechselt und in den Unterdruck-Vakuumzustand eintritt, sich der Druckentlastungsventilkörper (41) unter der Wirkung der Schwerkraft nach unten bewegt und das Luftauslassloch (43) abdichtet.

10. Druckkochtopf nach Anspruch 9, wobei ein Auslassrohr (21) an der Abdeckung (2) angeordnet ist, das Auslassrohr (21) an einer Innenseite des elastischen Körpers (42) angeordnet ist, der Druckentlastungsventilkörper (41) einen Druckbeaufschlagungsabschnitt (44), der an einer Außenwand des Auslassrohrs (21) ummantelt ist, und einen eingebetteten Abschnitt (45) umfasst, wobei der eingebettete Abschnitt (45) an einer inneren Bodenwand des Druckbeaufschlagungsabschnitts (44) angeordnet ist und der eingebettete Abschnitt (45) dazu konfiguriert ist, hin- und herbewegbar in das Luftauslassloch (43) eingebettet zu werden.

11. Druckkochtopf nach Anspruch 10, wobei der eingebettete Abschnitt (45) in einer konischen Form mit einem sich von oben nach unten allmählich verringernden Außendurchmesser angeordnet ist.

12. Druckkochtopf nach einem der Ansprüche 1 bis 11, wobei das Absperrventil (5) einen Absperrventilkörper (51), einen ersten Dichtungsring (52) und einen zweiten Dichtungsring (53) umfasst, an der Abdeckung (2) ein Abdeckdurchgangsloch (54) vorgesehen ist, in dem der Absperrventilkörper (51) auf und ab gleitet, der erste Dichtungsring (52) an einem Ende des Absperrventilkörpers (51) im Aufnahmeraum (11) angeordnet ist, und der zweite Dichtungsring (53) am anderen Ende des Absperrventilkörpers (51) angeordnet ist, und wenn sich der Aufnahmeraum (11) in einem drucksteigenden Zustand befindet, sich der Absperrventilkörper (51) nach oben bewegt, um das Öffnen der Abdeckung (2) zu begrenzen, und den ersten Dichtungsring (52) zum Abdichten des Abdeckdurchgangslochs (54) antreibt; und wenn der Aufnahmeraum (11) von dem Hochdruckzustand in den Mikro-Überdruckzustand wechselt und in den Unterdruck-Vakuumzustand eintritt, sich der Absperrventilkörper (51) unter der Wirkung der Schwerkraft nach unten zurück in eine Ausgangsposition bewegt, und die Schwerkraft des Absperrventils (5) bewirkt, dass der zweite Dichtungsring (53) das Abdeckdurchgangsloch (54) abdichtet.

## Revendications

1. La cocotte minute à pression configuré pour avoir un état de vide sous pression négative, la cocotte minute à pression comprenant :
un corps (1), ayant un espace de réception (11) pour placer de la nourriture ;
un couvercle (2), verrouillé sur une ouverture du corps (1) ; et
une structure de commande pour ouvrir et fermer automatiquement l'espace de réception (11), dans lequel
la structure de commande comprend :
un élément d'étanchéité élastique (3), disposé entre le corps (1) et le couvercle (2), et configuré pour sceller un espace entre le corps (1) et le couvercle (2) ;
une soupape de décompression (4), disposée sur le couvercle (2), et configurée pour contrôler la pression d'air dans l'espace de réception (11) ; et
une soupape d'arrêt (5), disposée sur le couvercle (2), et configurée pour limiter l'ouverture du couvercle (2), dans lequel
l'espace de réception (11) est configuré pour comprendre un état de haute pression, un état de pression micro-positive et un état de vide sous pression négative, et lorsque l'espace de réception (11) est dans l'état de haute pression, la soupape de décompression (4) est soulevée vers le haut par une poussée de haute pression, pour évacuer le gaz sous haute pression dans l'espace de réception (11), et la soupape d'arrêt (5) est soulevée vers le haut sous pression pour limiter l'ouverture du couvercle (2) et est dans un état scellé ; et lorsque l'espace de réception (11) est dans l'état de pression micro-positive ou l'état de vide sous pression négative, la soupape de décompression (4), la soupape d'arrêt (5), le corps (1) et le couvercle (2) sont chacun dans l'état scellé,
dans lequel l'élément d'étanchéité élastique (3) comprend une première garniture d'étanchéité annulaire (31) disposée sur une paroi latérale interne du couvercle (2),
**caractérisé en ce que,**
le corps (1) a un bord d'ouverture (12), la première garniture d'étanchéité annulaire (31) est une bague d'étanchéité, comprenant une bague supérieure (3a), une bague inférieure (3b) et une bague en forme de lèvre inférieure (3c) ; une extrémité externe de la bague supérieure (3a) est solidairement reliée à une extrémité externe de la bague inférieure (3b), une extrémité interne de la bague supérieure (3a) et une extrémité interne de la bague inférieure (3b) sont disposées en oblique dans des directions s'éloignant l'une de l'autre ; une extrémité de la bague en forme de lèvre inférieure (3c) est fixée sur la bague inférieure (3b), et la bague en forme de lèvre inférieure (3c) est disposée en oblique vers l'extérieur ; lorsque l'espace de réception (11) est dans l'état de haute pression, la bague supérieure (3a) et la bague inférieure (3b) se dilatent vers l'extérieur et se déforment sous pression, de sorte que la bague supérieure (3a) scelle fortement le couvercle (2), et la bague inférieure (3b) et la bague en forme de lèvre inférieure (3c) viennent en butée contre le bord d'ouverture (12) et scellent fortement le corps (1) ; lorsque l'espace de réception (11) est dans l'état de légère surpression ou l'état de vide sous pression négative, à la fois la bague supérieure (3a) et la bague inférieure (3b) reviennent à une forme libre initiale, et la bague en forme de lèvre inférieure (34) compense un jeu d'ajustement entre le couvercle (2) et le bord d'ouverture (12) pour maintenir l'espace de réception (11) dans l'état de vide sous pression négative.

2. La cocotte minute à pression selon la revendication 1, dans lequel une bague en forme de lèvre supérieure, symétriquement disposée avec la bague en forme de lèvre inférieure (3c), est disposée sur la bague supérieure (3a).

3. La cocotte minute à pression selon la revendication 1, dans lequel un espace de déformation (3d) est formé entre la bague supérieure (3a) et la bague inférieure (3b), et un élément de renforcement (3e) configuré pour maintenir la bague supérieure (3a) et la bague inférieure (3b) sans déformation dans l'état de vide sous pression négative est disposé dans l'espace de déformation (3d).

4. La cocotte minute à pression selon la revendication 3, dans lequel l'élément de renforcement (3e) comprend une pluralité d'éléments de renforcement en forme de nervure, et la pluralité d'éléments de renforcement en forme de nervure sont régulièrement disposés dans l'espace de déformation (3d).

5. La cocotte minute à pression selon la revendication 1, dans lequel le corps (1) a un bord d'ouverture (12), la première garniture d'étanchéité annulaire (31) comprend une partie de liaison supérieure (32) et une partie de liaison inférieure (33), une extrémité externe de la partie de liaison supérieure (32) est solidairement reliée à une extrémité externe de la partie de liaison inférieure (33), et une extrémité interne de la partie de liaison supérieure (32) et une extrémité interne de la partie de liaison inférieure (33) sont disposées en oblique dans des directions s'éloignant l'une de l'autre ; lorsque l'espace de réception (11) est dans l'état de haute pression, la partie de liaison supérieure (32) et la partie de liaison inférieure (33) se dilatent vers l'extérieur et se déforment sous pression, de sorte que la partie de liaison supérieure (32) scelle fortement le couvercle (2), et la partie de liaison inférieure (33) vient en butée contre le bord d'ouverture (12) et scellent fortement le corps (1) ; lorsque l'espace de réception (11) est dans l'état de pression micro-positive ou l'état de vide sous pression négative, à la fois la partie de liaison supérieure (32) et la partie de liaison inférieure (33) reviennent à une forme libre initiale.

6. La cocotte minute à pression selon la revendication 5, dans lequel l'élément d'étanchéité élastique (3) comprend en outre une deuxième garniture d'étanchéité annulaire (34) disposée sur le bord d'ouverture (12) et configurée pour venir en butée contre un côté inférieur de la partie de liaison inférieure (33).

7. La cocotte minute à pression selon la revendication 6, dans lequel la deuxième garniture d'étanchéité annulaire (34) comprend une partie en forme de manchon (35) emmanchée sur le bord d'ouverture (12) et une partie de butée (36) solidairement reliée à la partie en forme de manchon (35), et lorsque l'espace de réception (11) est dans l'un des états de haute pression, de pression micro-positive et de vide sous pression négative, la partie de butée (36) vient en butée contre le côté inférieur de la partie de liaison inférieure (33).

8. La cocotte minute à pression selon la revendication 7, dans lequel une extrémité interne de la partie de butée (36) est solidairement reliée à une extrémité interne de la partie en forme de manchon (35), et la partie de butée (36) est disposée en oblique vers l'extérieur.

9. La cocotte minute à pression selon la revendication 1, dans lequel la soupape de décompression (4) comprend un corps de soupape de décompression (41) relié de manière mobile au couvercle (2) dans une direction verticale et un corps élastique (42) disposé sur le couvercle (2), un trou de sortie d'air (43) en communication avec l'espace de réception (11) est prévu sur le corps élastique (42), et lorsque l'espace de réception (11) est dans l'état de haute pression, le corps de soupape de décompression (41) est soulevé vers le haut par la poussée de haute pression, et le trou de sortie d'air (43) est ouvert ; et lorsque l'espace de réception (11) passe de l'état de haute pression à l'état de pression micro-positive et entre dans l'état de vide sous pression négative, le corps de soupape de décompression (41) se déplace vers le bas sous l'action de la gravité, et scelle le trou de sortie d'air (43).

10. La cocotte minute à pression selon la revendication 9, dans lequel un tuyau d'échappement (21) est disposé sur le couvercle (2), le tuyau d'échappement (21) est disposé sur un côté interne du corps élastique (42), le corps de soupape de décompression (41) comprend une portion d'application de pression (44) emmanchée sur une paroi externe du tuyau d'échappement (21) et une portion intégrée (45), la portion intégrée (45) est disposée sur une paroi inférieure interne de la portion d'application de pression (44), et la portion intégrée (45) est configurée pour être insérée de manière réciproque dans le trou de sortie d'air (43).

11. La cocotte minute à pression selon la revendication 10, dans lequel la portion intégrée (45) est disposée en forme de cône avec un diamètre externe qui diminue progressivement du haut vers le bas.

12. La cocotte minute à pression selon l'une quelconque des revendications 1 à 11, dans lequel la soupape d'arrêt (5) comprend un corps de soupape d'arrêt (51), une première bague d'étanchéité (52) et une deuxième bague d'étanchéité (53), un trou traversant de couvercle (54) dans lequel le corps de soupape d'arrêt (51) coulisse vers le haut et vers le bas est prévu sur le couvercle (2), la première bague d'étanchéité (52) est disposée à une extrémité du corps de soupape d'arrêt (51) dans l'espace de réception (11), et la deuxième bague d'étanchéité (53) est disposée à l'autre extrémité du corps de soupape d'arrêt (51) ; lorsque l'espace de réception (11) est dans un état de montée en pression, le corps de soupape d'arrêt (51) se déplace vers le haut, pour limiter l'ouverture du couvercle (2), et entraîne la première bague d'étanchéité (52) à sceller le trou traversant de couvercle (54) ; et lorsque l'espace de réception (11) passe de l'état de haute pression à l'état de pression micro-positive et entre dans l'état de vide sous pression négative, le corps de soupape d'arrêt (51) se déplace vers le bas pour revenir à une position initiale sous l'action de la gravité, et la gravité de la soupape d'arrêt (5) amène la deuxième bague d'étanchéité (53) à sceller le trou traversant de couvercle (54).
